# EUROPÄISCHE PATENTSCHRIFT

(11) **EP 1 262 740 B1**
(45) Veröffentlichungstag und Bekanntmachung des Hinweises auf die Patenterteilung: **13.09.2017**
(21) Anmeldenummer: 02011895.6
(22) Anmeldetag: 29.05.2002
(51) Int. Cl.: G06F 3/01, G06F 3/0354, G06F 3/0362, G01C 21/36, G06F 3/0481

(54) **Fahrzeugrechner-System und Verfahren zur Steuerung eines Cursors für ein Fahrzeugrechner-System**
Vehicle computer system and method for controlling a cursor for a vehicle computer system
Système d'ordinateur véhiculaire et procédé de commande d'un curseur pour système d'ordinateur véhiculaire

(30) Priorität: 31.05.2001 DE 10126421
(43) Veröffentlichungstag der Anmeldung: 04.12.2002
(73) Patentinhaber: Harman Becker Automotive Systems (Becker Division) GmbH, 76307 Karlsbad (DE)
(72) Erfinder: Weimper, Andreas, 70794 Filderstadt (DE)
(74) Vertreter: Bertsch, Florian Oliver

(56) Entgegenhaltungen:
- US-A- 5 956 016
- US-B1- 6 219 032
- JACK TIGH DENNERLEIN ET AL ASSOCIATION FOR COMPUTING MACHINERY: "FORCE-FEEDBACK IMPROVES PERFORMANCE FOR STEERING AND COMBINED STEERING-TARGETING TASKS" CHI 2000 CONFERENCE PROCEEDINGS. CONFERENCE ON HUMAN FACTORS IN COMPUTING SYSTEMS. THE HAQUE, NETHERLANDS, APRIL 1 - 5, 2000, CHI CONFERENCE PROCEEDINGS. HUMAN FACTORS IN COMPUTING SYSTEMS, NEW YORK, NY : ACM, US, 1. April 2000 (2000-04-01), Seiten 423-429, XP001090194 ISBN: 0-201-48563-X

## Beschreibung

Die Erfindung betrifft ein Fahrzeugrechner-System mit einer Rechnereinheit, einem Bildschirm zur Darstellung von Informationen, eines Cursors und Auswahlmenüs mit einzelnen Auswahlmenüpunkten, und einem Bedienelement zur zweidimensionalen Bewegung des Cursors auf dem Bildschirm und zur Auswahl von Auswahlmenüpunkten. Die Erfindung betrifft auch ein Verfahren zur Steuerung eines Cursors für ein Fahrzeugrechner-System, das einen Bildschirm zur Darstellung von Informationen und Auswahlmenüs und des Cursors, und ein Bedienelement zur Bewegung des Cursors und zur Auswahl eines Auswahlmenüs aufweist.

Fahrzeugrechner-Systeme der vorgenannten Art sind allgemein bekannt. Sie werden in zunehmendem Maße in modernen Kraftfahrzeugen eingebaut. Die Bedienung solcher Systeme erfolgt üblicherweise über ein zentrales Bedienelement, beispielsweise in Form eines Dreh-/Drückstellers, das nicht nur die Auswahl bestimmter Menüpunkte, sondern auch die Eingabe von Daten, beispielsweise von Ort und Straße in einem Navigationssystem, ermöglicht. Neben einer alphanumerischen Eingabe gibt es bei Navigationssystemen die alternative Möglichkeit, den Zielort auf einer am Bildschirm dargestellten Karte mit dem Cursor anzufahren und auszuwählen. Da die vorgenannten Dreh-/Drücksteller die Bewegung des Cursors nur in eine Richtung erlauben, ist die Eingabe des Zielorts über diese Alternative in zwei Schritten erforderlich und damit aufwendig. Besser geeignet sind hierfür Bedienelemente, die eine gleichzeitige zweidimensionale Bewegung des Cursors auf dem Bildschirm erlauben. Hierzu gehören beispielsweise die Kreuzwippe, ein in x- und y-Richtung verschiebbares Schiebeelement oder ein joystickähnliches Bedienelement.

Obgleich eine Auswahl des Zielorts auf der Karte mit solchen Bedienelementen möglich ist, erweist sich die Bedienung aufgrund der äußeren Einflüsse in einem Kraftfahrzeug als nicht sehr ergonomisch. Insbesondere ist es für den Benutzer schwierig, mit dem Cursor Straßen - und nur diese sind als Zielort sinnvoll - anzufahren.

Ähnliche ergonomische Probleme treten natürlich auch bei anderen Anwendungen auf, bei denen eine freie zweidimensionale Bewegung des Cursors zur Auswahl einer Funktion erforderlich ist. Hierzu zählt beispielsweise auch die Internet-Funktion, bei der auf einer Internet-Seite beliebig verteilte Hypertext-Verknüpfungsworte (Hyperlinks) auswählbar sind, indem der Cursor darauf bewegt wird. Für solche Eingaben in das Fahrzeugrechner-System ist zusätzlich eine Auge-Hand-Koordination unerläßlich, da der Benutzer ansonsten nicht feststellen kann, ob er mit dem Cursor die gewünschte Stelle auf dem Bildschirm erreicht hat. Auch dieser Umstand ist aus ergonomischer Sicht verbesserungswürdig.

Die Kraftbeaufschlagung eines Bedienelementes in Abhängigkeit der Position eines Cursors im Verhältnis zu anderen dargestellten grafischen Elementen, insbesondere mit einen Rilleneffekt, ist aus dem Stand der Technik bekannt: US-B1-6,219,032.

Die Kraftbeaufschlagung eines in der Ebene verschiebbaren Bedienelementes zur Interaktion mit einem menübasierten Navigationssystem in einem Fahrzeug ist bekannt aus US5,956,016.

Die Kraftbeaufschlagung eines Bedienelementes zur Unterstützung des Benutzers bei der Führung eines Cursors durch virtuelle Tunnel ist bekannt aus: Dennerlein et al. "Force Feedback Improves Performance For Steering and Combined Steering-Targeting Tasks", Seiten 423-429, Proceedings of CHI 2000.

Vor diesem Hintergrund besteht die der Erfindung zugrunde liegende Aufgabe darin, das Fahrzeugrechner-System der eingangs genannten Art so weiterzubilden, daß eine ergonomisch verbesserte Bedienung erreicht wird, die geringere Anforderungen an die Auge-Hand-Koordination stellt.

Diese Aufgabe wird bei dem Fahrzeugrechner-System der eingangs genannten Art dadurch gelöst, daß ein verbessertes Fahrzeugrechner-System und ein entsprechendes Verfahren gemäß den unabhängigen Ansprüchen 1 und 7 bereit gestellt wird. Die vorliegende Erfindung wird durch den Schutzumfang der unabhängigen Ansprüche definiert. Das Fahrzeugrechner-System weist also ein Mittel auf, das das Bedienelement unabhängig von der Bedienung durch den Benutzer betätigt, wenn der Cursor auf dem Bildschirm eine bestimmte Position relativ zu den vorgebbaren Informationen einnimmt. Gelangt der Cursor durch eine manuelle Betätigung des Bedienelements in den Einzugsbereich des Darstellungsbereichs einer vorgebbaren Information, d.h. unterschreitet der Abstand Cursor-Darstellungsbereich einen vorgebbaren Wert, wird ein drittes Mittel, Kraftbeaufschlagungseinheit genannt, das Bedienelement mit einer Kraft beaufschlagen, um den Cursor in den Darstellungsbereich zu bewegen, sofern der Benutzer nicht eine größere Gegenkraft entgegenbringt. Dieses "anziehende" Verhalten des Darstellungsbereichs auf den Cursor ist vergleichbar mit einem Magnet (im vorliegenden Fall der Darstellungsbereich), der einen magnetischen Stoff (im vorliegenden Fall der Cursor) magnetisch anzieht. Hierbei ist der von dem zweiten Mittel erzeugte Einzugsbereich vergleichbar mit dem Wirkungsfeld des Magneten. Befindet sich der magnetische Stoff außerhalb des Wirkungsfeldes, wird er nicht angezogen. Gleiches gilt für den Cursor, der außerhalb des Einzugsbereichs nicht in den Darstellungsbereich bewegt wird. Durch das dritte Mittel erfährt der Benutzer des Fahrzeugrechner-Systems dieses Verhalten auf haptischem Wege, indem das Bedienelement entsprechend bewegt wird. Der Benutzer kann sozusagen die Anziehungskraft des Darstellungsbereichs fühlen.

Der Vorteil dieses Fahrzeugrechner-Systems liegt nun einerseits darin, daß die Handhabung aufgrund des vereinfachten Positionierens des Cursors auf einer bestimmten Information deutlich vereinfacht wird. Andererseits "spürt" der Benutzer die Bewegung des Cursors und die automatische Positionierung auf einem Darstellungsbereich über die Betätigung des Bedienelements, ohne daß er seinen Blick auf den Bildschirm richten müßte. Die Anforderungen an die Hand-Auge-Koordination sind damit deutlich herabgesetzt.

Vorzugsweise handelt es sich bei den auf dem Bildschirm dargestellten Informationen um Straßen, die zur Eingabe eines Zielorts in einem Navigationssystem erforderlich sind. Das heißt mit anderen Worten, daß die Straßen einer Navigationskarte bestimmte Darstellungsbereiche auf dem Bildschirm abdecken, und daß das zweite Mittel zu einem nahe des Cursors liegenden Darstellungsbereichs einen Einzugsbereich vorgebbarer Größe ermittelt. Diese Einzugsbereiche sind vergleichbar Randbereichen vorgebbarer Breite, die sich links und rechts von den dargestellten Straßen erstrecken. Gelangt der Cursor durch Bedienung des Bedienelements in einen solchen Einzugsbereich, wird das dritte Mittel das Bedienelement mit einer Betätigungskraft beaufschlagen, um den Cursor in den Darstellungsbereich zu bewegen. Dies spürt der Benutzer und kann damit ohne optischen Kontakt zum Bildschirm erkennen, daß der Cursor auf einem Objekt, beispielsweise einer Straße, eines Navigationssystems liegt.

In gleicher Weise kann es sich bei den auf dem Bildschirm dargestellten Informationen auch um sogenannte Hypertext-Verknüpfungsworte (Hyperlinks) handeln, die in einem Internet-Modus des Fahrzeugrechner-Systems eingesetzt werden. Solche Hyperlinks sind Teil von üblichen Internet-Seiten, die sich auf dem Bildschirm darstellen lassen. Erfindungsgemäß wird zu einem Hyperlink ebenfalls ein Einzugsbereich ermittelt. Befindet sich der Cursor in diesem Einzugsbereich, wird er automatisch auf den Hyperlink gezogen, wobei das Bedienelement mit einer entsprechenden Betätigungskraft beaufschlagt wird.

Auch hier wird die Eingabe bzw. die Auswahl von Informationen deutlich vereinfacht.

Vorzugsweise ist das Bedienelement als Kreuzwippen-Element, Schiebe-Element oder Kipp-Element ausgebildet. Allgemein muß das Bedienelement eine Bewegung des Cursors in vier Richtungen, nämlich in die x- und y-Richtung erlauben, so daß der Cursor über das Bedienelement auf jedem beliebigen Punkt des Bildschirm positioniert werden kann.

In einer bevorzugten Weiterbildung beaufschlagt das dritte Mittel bei einer Betätigung des Bedienelements in einer der beiden Richtungen zur Bewegung des Cursors das Bedienelement mit einer Betätigungskraft, um den Cursor in die andere Richtung so zu bewegen, daß er auf dem Darstellungsbereich bleibt.

Das heißt mit anderen Worten, daß der Cursor dem Verlauf einer Straße automatisch folgt, wenn das Bedienelement durch den Benutzer in eine Richtung gedrückt wird. Die entsprechende Bewegung rechtwinklig dazu wird über das dritte Mittel durch entsprechende Beaufschlagung des Bedienelements mit einer Betätigungskraft erzeugt.

Der Vorteil dieser Maßnahme ist darin zu sehen, daß der Benutzer über die automatische Betätigung des Bedienelements ein Gefühl für den Verlauf der Straße erhält. Der Benutzer kann den Cursor nur durch Überwinden der durch das dritte Mittel aufgebrachten Betätigungskraft von der Straße wegbewegen. Letztlich wird eine weitere Verbesserung der Ergonomie durch diese Maßnahme erreicht.

Vorzugsweise ist die Höhe der Betätigungskraft einstellbar, und vorzugsweise vom Typ der Straße abhängig.

Das heißt mit anderen Worten, daß unterschiedliche Straßentypen den Cursor mit unterschiedlicher Kraft an der gewünschten Position halten und dies entsprechend auf das Bedienelement über das dritte Mittel übertragen wird. Der Benutzer kann durch die unterschiedliche Höhe der Betätigungskraft somit spüren, auf welcher Art von Straße sich der Cursor momentan befindet. Eine weitere Verbesserung der Ergonomie des Systems ist damit erzielbar.

In einer bevorzugten Weiterbildung beaufschlagt das dritte Mittel das Bedienelement mit einer der Bedienkraft entgegenwirkenden Kraft, wenn der Cursor bei einer Bedienung des Bedienelements den Rand des Bildschirms erreicht.

Das heißt mit anderen Worten, daß das dritte Mittel quasi einen Endanschlag generiert, der dann wirkt, wenn der Cursor den Bildschirmrand erreicht. Auf diese Art und Weise kann der Benutzer auf sehr einfache Art und Weise ein Gefühl für die Position des Cursors auf dem Bildschirm erfahren. Besonders bevorzugt wird bei Überdrücken dieses künstlich erzeugten Endanschlags eine weitere Funktion auslösen, beispielsweise ein Verschieben des Kartenausschnitts auf dem Bildschirm.

Die der Erfindung zugrunde liegende Aufgabe wird auch durch ein Verfahren gelöst, das die Schritte des Anspruchs 7 umfasst.

Die diesem Verfahren zugrunde liegende Funktion entspricht der bereits in Zusammenhang mit dem erfindungsgemäßen Fahrzeugrechner-System beschriebenen Funktion, so daß auf eine nochmalige Beschreibung an dieser Stelle verzichtet werden kann.

Bevorzugt handelt es sich bei den auf dem Bildschirm dargestellten Informationen um Straßen, die Teil eines dargestellten Kartenausschnitts eines Navigationssystems sind. Vorzugsweise kann es sich bei den auf dem Bildschirm dargestellten Informationen auch um Hypertext-Verknüpfungsworte (Hyperlinks) einer Internet-Seite handeln.

Besonders bevorzugt wird bei einer manuellen Betätigung des Bedienelements in eine der beiden Richtungen zur Bewegung des Cursors eine Betätigungskraft erzeugt, mit der das Bedienelement beaufschlagt wird, um den Cursor in die andere Richtung zu bewegen, so daß er den Darstellungsbereich nicht verläßt.

Das heißt mit anderen Worten, daß das Bedienelement quasi verriegelt wird, um zu verhindern, daß der Cursor durch eine falsche Bedienung des Bedienelements von der vorgewählten Position und damit aus dem Wirkungsbereich genommen werden kann.

Besonders bevorzugt wird das Bedienelement mit einer der manuellen Bedienkraft entgegenwirkenden Kraft beaufschlagt, wenn der Cursor den Bildschirmrand erreicht. Damit wird quasi ein Endanschlag für das Bedienelement erzeugt, der nur durch eine erhöhte Bedienkraft überwunden werden kann. Dieses Überwinden des "künstlichen" Anschlags ist beispielsweise dann notwendig, wenn der Kartenausschnitt oder die am Bildschirm gezeigte Internet-Seite verschoben oder umgeblättert werden soll.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand von Ausführungsbeispielen mit Bezug auf die Zeichnung näher erläutert. Dabei zeigen:
- Fig. 1a: ein schematisches Blockschaltdiagramm eines Fahrzeugrechner-Systems,
- Fig. 1b: eine schematische Darstellung eines Bedienelements;
- Fig. 2: eine schematische Darstellung einer Bildschirmmaske zur Erläuterung des Verfahrens;
- Fig. 3a und b: zwei unterschiedliche Bildschirmmasken eines Navigationssystems; und
- Fig. 4a und 4b: eine schematische Darstellung einer InternetSeite, wobei zur Erläuterung des erfindungsgemäßen Verfahrens in Fig. 4b Einzugsbereiche angegeben sind.

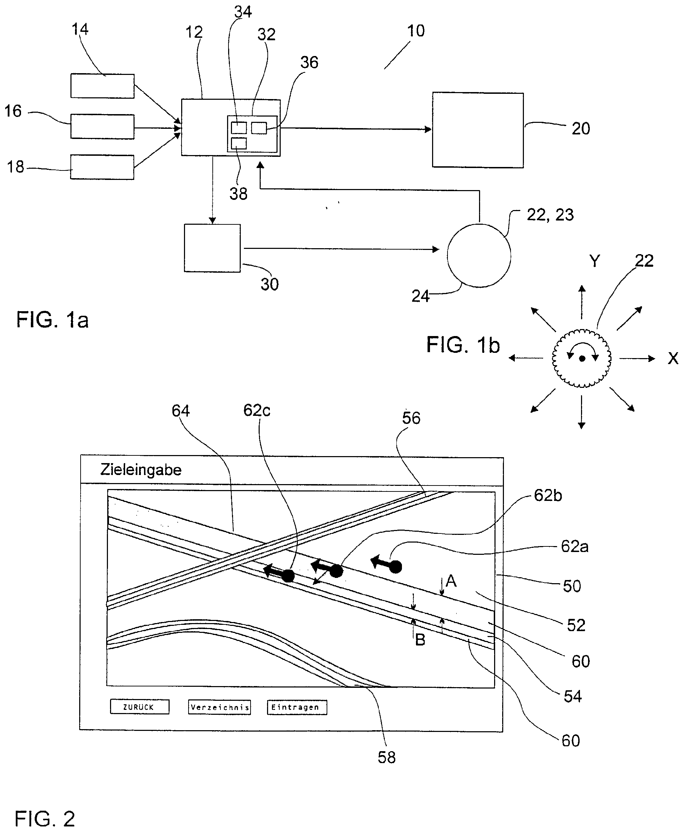

In Fig. 1 ist ein Fahrzeugrechner als Blockschaltdiagramm gezeigt und mit dem Bezugszeichen 10 gekennzeichnet. Ein solcher Fahrzeugrechner 10 weist eine Rechnereinheit 12 auf, die beispielsweise in Form eines handelsüblichen PCs ausgebildet sein kann. Üblicherweise ist die Rechnereinheit 12 jedoch an die in einem Kraftfahrzeug herrschenden Bedingungen angepaßt. Die Rechnereinheit 12 dient als Steuerzentrale für eine Vielzahl unterschiedlicher Peripheriegeräte, wobei in Fig. 1 beispielhaft ein Navigationssystem 14, ein Telefon-System 16 und eine Internet-Kommunikationseinheit 18 dargestellt sind. Diese Peripheriesysteme werden heutzutage bereits in Kraftfahrzeugen verbaut.

Das Navigationssystem 14 umfaßt einen GPS-Empfänger, Rad- und Lenkungssensoren bei Einsatz einer Koppelnavigation, sowie ein Speichermedium, auf dem Navigationsdaten abgelegt sind. Zu diesen Navigationsdaten zählen beispielsweise Straßenverläufe. Die Software zur Berechnung der Fahrstrecken und anderer erforderlicher Daten läuft auf der Rechnereinheit 12 ab, die nach Bedarf entsprechende Daten von dem Navigationssystem 14 holt. Mittlerweile ist es auch möglich, diese Berechnung auf einen zentralen Server auszulagern, der Daten vom Fahrzeugrechner erhält, diese verarbeitet und das Ergebnis zurück zum Fahrzeugrechner sendet.

Zur Darstellung von Informationen sowie von Auswahlmenüs ist ein Bildschirm 20 vorgesehen, der in einem Fahrzeug üblicherweise in der Mittelkonsole für den Fahrer gut sichtbar angeordnet ist. Der Bildschirm 20 ist vorzugsweise als LCD-Bildschirm ausgebildet und empfängt die Signale von der Rechnereinheit 12.

Zur Bedienung der Rechnereinheit 12 und damit auch der über die Rechnereinheit 12 steuerbaren Peripheriegeräte 14-18 ist ein Bedienelement 22 vorgesehen. Dieses Bedienelement 22 ist im vorliegenden Ausführungsbeispiel als Schiebeelement 23 (wegabhängiges Stellteil) ausgebildet, das sich in x- und y-Richtung frei verschieben läßt. Darüber hinaus läßt sich das Bedienelement 22 um die Längsachse drehen, und in Richtung der Längsachse drücken, so daß zusätzlich ein Dreh-/Drücksteller 24 realisiert ist. In Fig. 1b ist dieses Bedienelement 22 schematisch dargestellt, wobei die möglichen Bewegungsrichtungen durch Pfeile angedeutet sind.

Der zuvor beschriebene Fahrzeugrechner 10 mit den angegebenen Komponenten wird von der Anmelderin unter dem Namen "CarPC" angeboten. Im übrigen entspricht er den Systemen, die in heutigen Fahrzeugen häufig eingebaut sind.

Im Gegensatz zu den bisherigen Lösungen weist der Fahrzeugrechner 10 in Fig. 1a eine Kraft-Rückkopplungseinheit bzw. eine Kraft-Beaufschlagungseinheit 30 auf. Diese Einheit 30 empfängt Steuerungsdaten von der Rechnereinheit 12 und dient dazu, abhängig von diesen Daten das Bedienelement 22 mit einer Betätigungskraft zu beaufschlagen. Diese Kraft wird beispielsweise über elektrisch betriebene Aktuatoren erzeugt, die mechanisch auf das Bedienelement 22 einwirken. Die Kraft-Beaufschlagungseinheit 30 ist so ausgebildet, daß eine Kraft in jede der in Fig. 1b durch Pfeile angezeigten Richtungen wirken kann. Mit Hilfe dieser Kraft-Beaufschlagungseinheit 30 lassen sich unterschiedliche Funktionen realisieren, beispielsweise ist es denkbar, eine aus dem Bereich mechanischer Bedienelemente bekannte Rasterung umzusetzen. Darüber hinaus ist es mit der Einheit 30 auch möglich, Bewegungen des Bedienelements 22 in bestimmte Richtungen zu unterbinden.

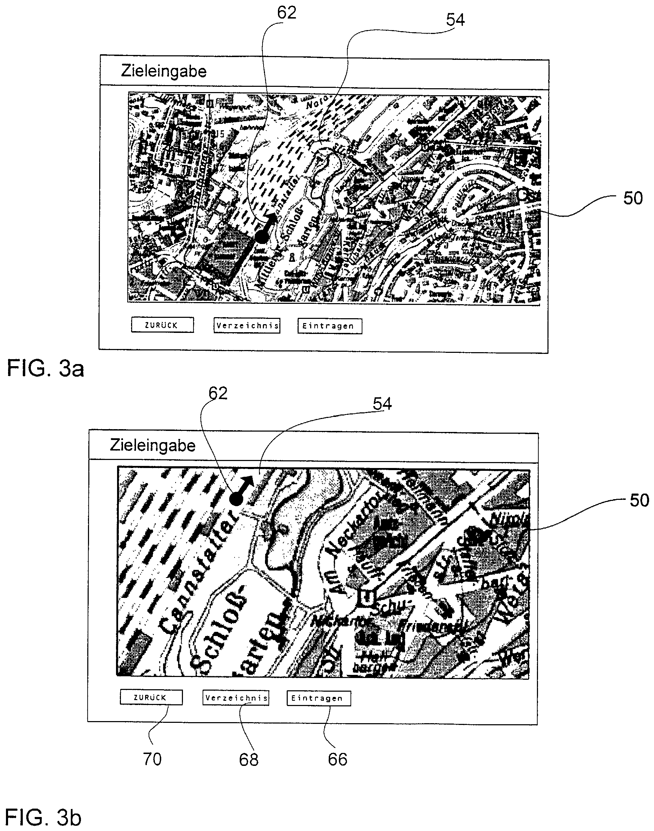

Die Rechnereinheit 12 weist zur Steuerung der Kraft-Beaufschlagungseinheit 30 eine entsprechende Steuereinheit 32 auf, deren Funktion nachfolgend mit Bezug auf die Fig. 2 und 3a, b im Zusammenhang mit dem Navigationssystem 14 erläutert wird.

Es ist bekannt, daß Fahrzeug-Navigationssysteme dazu dienen, dem Fahrer nach der Eingabe eines Zielortes den Weg dorthin anzugeben. Üblicherweise erfolgt die Auswahl des Zielorts über die Eingabe alphanumerischer Zeichen. Es ist mittlerweile jedoch auch möglich, den Zielort in einem auf dem Bildschirm 20 dargestellten Kartenausschnitt zu suchen und durch Bewegen des Cursors auf den gewünschten Zielort auszuwählen. Die Steuereinheit 32 unterstützt nun den Benutzer bei dieser Auswahl wie folgt:
In Fig. 2 ist eine Bildschirmmaske 50 dargestellt, die zur Auswahl eines Zielorts dient. In dem dargestellten Kartenausschnitt 52 sind mehrere Straßen 54, 56 und 58 beispielhaft angegeben.

Die Steuereinheit 32 umfaßt ein Mittel 34, das die Position der Straßen 54-58 auf dem Bildschirm erfaßt. Das Mittel 34 ermittelt also einen Darstellungsbereich auf dem Bildschirm, der von den Straßen 54-58 bedeckt ist. Auf der Grundlage dieses berechneten Darstellungsbereichs bzw. Darstellungsbereiche ermittelt eine Einheit 36 zu jedem Darstellungsbereich bzw. zu jeder Straße einen Randbereich 60 zur linken und rechten Seite der jeweiligen Straße. Diese Randbereiche 60 sind in Fig. 2 grau hinterlegt. Die Breite dieser Randbereiche läßt sich vom Benutzer vorab einstellen, wobei im vorliegenden Ausführungsbeispiel unterschiedliche Breiten gewählt und mit A und B bezeichnet sind. Alternativ ist es auch denkbar, daß die Breite der Randbereiche abhängig von dem Typ der Straße gewählt wird; beispielsweise eine große Breite bei Autobahnen und eine geringe Breite bei städtischen Straßen, oder umgekehrt.

An dieser Stelle sei angemerkt, daß die in Fig. 2 dargestellten Randbereiche 60 nur zur Erläuterung eingezeichnet sind. Im normalen Betrieb des Navigationssystems werden diese Randbereiche zwar berechnet, nicht aber auf dem Bildschirm 20 dargestellt. Darüber hinaus sei an dieser Stelle angemerkt, daß es nicht notwendig ist, für alle auf dem Bildschirm dargestellten Straßen den Randbereich zu berechnen. Dieser dient vielmehr der verständlichen Darstellung der Funktionsweise. Letztlich ist es ausreichend, wenn der Randbereich zu den bezüglich des Cursors umliegenden Straßen ermittelt wird, also mit anderen Worten der Abstand zwischen Cursor und umliegenden Straßen.

Die Steuereinheit 32 weist des weiteren eine Einheit 38 auf, die der Berechnung der Position eines Cursors auf dem Bildschirm dient. In Fig. 2 sind zur Erläuterung der Funktionsweise der Steuereinheit 32 mehrere Cursor 62a, 62b und 62c dargestellt.

Die Funktion der Steuereinheit 32 besteht nun darin, zunächst zu prüfen, ob der Cursor 62 auf einer Straße 54-58 oder in einem Randbereich 60 liegt. Ist dies nicht der Fall, wie beispielsweise für den Cursor 62a, zieht die Prüfung keine weiteren Aktionen nach sich.

Bewegt nun der Benutzer den Cursor 62a über eine entsprechende Betätigung des Bedienelements 22 in den Randbereich 60 der Straße 54, was durch den Cursor 62b dargestellt ist, führt die durch die Steuereinheit 32 durchgeführte Prüfung zu dem Ergebnis, daß der Cursor 62b im Randbereich 60 liegt, d.h. einen vorgebbaren Abstand A unterschritten hat. Dies hat nun zur Folge, daß die Rechnereinheit 12 ein Steuersignal an die Kraft-Beaufschlagungseinheit 30 übermittelt, die das Bedienelement 22 über entsprechende elektrische Aktuatoren und unabhängig vom Benutzer, d.h. automatisch so betätigt, daß der Cursor 62 auf die Straße 54 gelangt, was durch den Cursor 62c dargestellt wird. Es versteht sich, daß die zuvor beschriebene Überprüfung der Cursorposition und der Vergleich mit der Position des Randbereichs 60 ständig auch während der Betätigung des Bedienelements 22 durchgeführt wird.

Der Randbereich 60 wirkt somit wie ein magnetisches Feld, das den Cursor 62 einfängt und auf die Straße 54 zieht.

Der Vorteil der vorbeschriebenen Steuerung liegt insbesondere darin, daß der Benutzer durch die automatische Betätigung des Bedienelements 22 über die Kraft-Beaufschlagungseinheit 30 spürt, daß der Cursor 62 automatisch auf eine Straße gezogen wird. Er muß seinen Blick hierfür also nicht auf den Bildschirm 20 richten.

In der Fig. 2 ist ein Bereich 64 gezeigt, in dem sich die beiden Straßen 54 und 56 kreuzen. Hierbei kommt es folglich auch zu einer Überschneidung der jeweiligen Randbereiche 60. Die Steuereinheit 32 erkennt eine solche Überschneidung und wird den Cursor 62 in diesem Überschneidungsbereich auf diejenige Straße ziehen, die eine höhere Priorität besitzt. Die Priorität läßt sich vorab vom Benutzer einstellen, oder beispielsweise abhängig vom Straßentyp automatisch erzeugen. Es wäre denkbar, den größten Straßen (beispielsweise Autobahnen) die größte Priorität, und den kleinsten Straßen die kleinste Priorität zuzuordnen. Sollten sich zwei Straßen gleicher Priorität kreuzen, kann nach dem Zufallsprinzip entschieden werden, auf welche Straße der Cursor gezogen wird. Eine bevorzugte Lösung besteht jedoch darin, den Cursor 62 auf die Kreuzung der beiden Straßen zu ziehen, von wo aus der Benutzer dann die Möglichkeit hat, den Cursor auf der gewünschte Straße weiterzuführen. Hierbei kann die vorgenannte Prioritätsregel eingreifen, insofern als die Bewegung des Bedienelements in Richtung der Straße höherer Priorität leichter geht, als bei der anderen Straße.

Für den Benutzer fühlt sich die Betätigung des Bedienelements in diesem Fall (Cursor auf eine Kreuzung) so an, als wäre das Bedienelement durch eine Kulisse (wie beispielsweise bei der Gangschaltung im Fahrzeug) geführt.

Mit Hilfe der Steuereinheit 32 und der Kraft-Beaufschlagungseinheit 30 ist es also möglich, sehr ergonomisch den Cursor zu dem gewünschten Zielort zu bewegen. Er wird insofern unterstützt, als er den Cursor nicht exakt auf beispielsweise die gewünschte Zielstraße bewegen muß. Vielmehr übernimmt dies nach Unterschreiten eines bestimmten Abstandes zu der Straße das System. Zusätzlich erhält der Fahrer über die Kraft-Beaufschlagungseinheit 30 und das Bedienelement 22 eine entsprechende Rückmeldung, so daß er nicht notwendigerweise auf den Bildschirm blicken muß. Da die "magnetische Wirkung" der Straßen auf dem Bildschirm auch dann nicht endet, wenn der Cursor auf einer Straße liegt, greift das System in der vorbeschriebenen Weise auch ein, wenn der Benutzer versehentlich den Cursor wieder von der Straße bewegt.

Möchte der Benutzer jedoch den Cursor von einer Straße auf eine andere Straße bewegen, muß er lediglich die von der Kraft-Beaufschlagungseinheit 30 aufgebrachte Kraft, die in ihrer Größe selbstverständlich begrenzt ist, überwinden.

Mit Bezug auf die Fig. 3a und 3b wird nachfolgend eine weitere Funktion der Steuereinheit 32 in Kombination mit der Kraft-Beaufschlagungseinheit 30 beschrieben.

In Fig. 3a ist ein Kartenausschnitt als Bildschirmmaske 50 zur Eingabe eines Zielorts dargestellt. Der Cursor 62 befindet sich in der Fig. 3a auf einer eingezeichneten Straße 54. Möchte der Benutzer nun den Cursor 62 auf dieser Straße bewegen, ist es lediglich erforderlich, das Bedienelement 22 in y-Richtung (vgl. Fig. 1b) zu drücken. Gelangt der Cursor aufgrund des schrägen Verlaufs der Straße 54 in den - nicht dargestellten - Randbereich, so wird über die Kraft-Beaufschlagungseinheit 30 das Bedienelement 22 sofort in x-Richtung mit einer Betätigungskraft beaufschlagt, so daß der Cursor wieder auf die Straße gelangt. Der Benutzer bekommt auf diese Weise über das Bedienelement 22 ein Gefühl für den Verlauf der Straße 54. Nur wenn er die von der Kraft-Beaufschlagungseinheit 30 erzeugte Betätigungskraft überdrückt, verläßt der Cursor 62 die Straße 54.

Erreicht der Benutzer durch Betätigen des Bedienelements 22 mit dem Cursor 62 den Rand der Bildschirmmaske 50, erzeugt die Kraft-Beaufschlagungseinheit 30 eine Kraft, die einen Endanschlag simuliert. Überdrückt der Benutzer diese Kraft, wird der Kartenausschnitt durch den entsprechenden benachbarten Kartenausschnitt ersetzt. Selbstverständlich sind auch andere Veränderungen des Kartenausschnittes, beispielsweise langsames Scrollen, etc., denkbar.

Verändert sich der Kartenausschnitt ist es erforderlich, die Stellung des Bedienelements 22 neu anzupassen. Ansonsten wären möglicherweise einzelne Bildschirmbereiche nicht mehr erreichbar. Um eine entsprechende Anpassung zu erzielen, wird die Kraft-Beaufschlagungseinheit 30 aktiviert. Sie beaufschlagt das Bedienelement mit einer Kraft, die es in eine Position bringt, die der Cursorposition auf dem Bildschirm entspricht. Dieser Vorgang kann schnell, mit relativ großer Kraft erfolgen, so daß der Benutzer diese Anpassung spürt. Selbstverständlich kann dieser Vorgang auch langsam und für den Benutzer kaum spürbar erfolgen.

Möchte der Benutzer den in Fig. 3 dargestellten Kartenausschnitt vergrößern, so ist es dies beispielsweise durch Drehen des Bedienelements 22 möglich. Ein Kartenausschnitt in vergrößertem Maßstab ist in Fig. 3b dargestellt.

Hat der Benutzer den gewünschten Zielort auf dem Kartenausschnitt gefunden, kann er diesen Zielort durch Aktivieren des in Fig. 3b angezeigten Menüpunkts "Eintragen" 66 in das Navigationssystem eintragen. Darüber hinaus stehen ihm weitere Auswahlmenüpunkte 68 bzw. 70 zur Verfügung, auf die an dieser Stelle jedoch nicht näher eingegangen werden muß. Es versteht sich, daß selbstverständlich auch andere Menüpunkte oder zusätzliche Menüpunkte auf dem Bildschirm 20 angezeigt werden können.

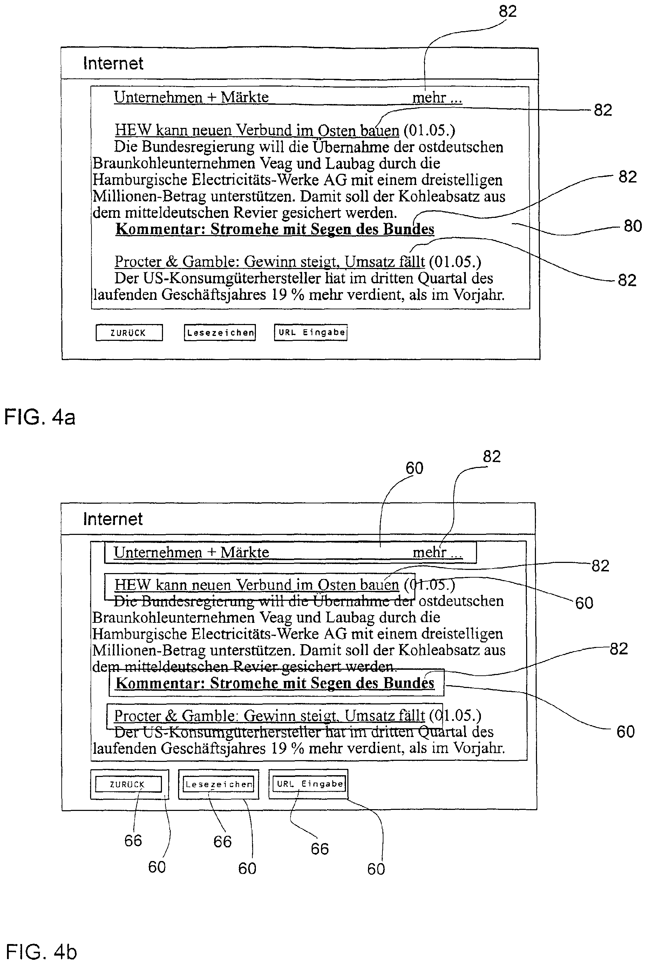

Im zuvor angegebenen Ausführungsbeispiel bildeten die Straßen eines Kartenausschnittes die "magnetischen" Bereiche, die Einfluß auf die Steuerung der Kraft-Beaufschlagungseinheit 30 haben. Es ist für den Fachmann jedoch ohne weiteres zu erkennen, daß beliebige andere Informationen ebenfalls magnetische Wirkung haben können. So ist in den Fig. 4a und 4b beispielsweise dargestellt, daß auch sogenannte Hypertext-Verknüpfungsworte einer Internet-Seite eine solche magnetische Wirkung haben können.

In Fig. 4a ist beispielhaft eine Internet-Seite 80 dargestellt, die nach entsprechender Aktivierung der Internet-Kommunikationseinheit 18 auf dem Bildschirm 20 dargestellt wird. Eine solche Internet-Seite 80 enthält üblicherweise eine oder mehrere sogenannter Hyperlinks, die in den beiden Fig. 4a und 4b mit einer Unterstreichung gekennzeichnet und mit dem Bezugszeichen 82 bezeichnet sind.

Solche Hyperlinks 82 erlauben es dem Benutzer, durch Bewegen des Cursors 62 auf einen solchen Hyperlink 82 und entsprechende Aktivierung relativ einfach zu verwandten Internet-Seiten zu gelangen.

Auch hier erfaßt die Steuereinheit 32 die Bildschirmposition der Hyperlinks 82 und erzeugt einen Randbereich 60 um den Darstellungsbereich der Hyperlinks herum. Diese Randbereiche 60 sind in Fig. 4b grau hinterlegt. Gelangt der Cursor auf einen solchen Randbereich 60, erfolgt eine entsprechende Ansteuerung der Kraft-Beaufschlagungseinheit 30 mit der Folge, daß elektrische Aktuatoren das Bedienelement 22 so betätigen, daß der Cursor auf den Hyperlink automatisch bewegt wird. Durch Drücken des Bedienelements 22 kann der Benutzer dann den Hyperlink aktivieren.

Die Vorteile dieser Steuerung entsprechen den bereits zuvor in Zusammenhang mit dem Navigationssystem erläuterten, so daß darauf nicht nochmals eingegangen werden muß. Letztlich ist jedoch ein wesentlicher Vorteil darin zu sehen, daß das Anfahren von Hyperlinks mit dem Cursor für den Benutzer vereinfacht wird und daß er über die automatische Betätigung des Bedienelements 22 eine haptische Rückmeldung darüber erhält.

Wie bereits bei dem vorhergehenden Ausführungsbeispiel wird die dargestellte Internet-Seite umgeblättert, wenn der Benutzer den Cursor an den Randbereich des Bildschirms bewegt und dort die von der Kraft-Beaufschlagungseinheit 30 entgegenwirkende Kraft (zur Symbolisierung eines Endanschlags) überdrückt.

Neben den in Fig. 4b gekennzeichneten Hyperlinks 82 können selbstverständlich auch die am Bildschirmrand dargestellten Auswahlmenüpunkte 66 eine magnetische Wirkung zugeordnet bekommen, so daß auch hier die Steuereinheit 32 einen Randbereich 60 ermittelt.

Darüber hinaus sorgt die Steuereinheit 32 in Kombination mit der Kraft-Beaufschlagungseinheit 30 dafür, daß der Benutzer eine erhöhte Betätigungskraft aufbringen muß, um den Cursor von einem Hyperlink 82 wegzubewegen. Damit wird gewährleistet, daß der Benutzer auch während Erschütterungen im Fahrzeug einen Hyperlink 82 auswählen kann.

Nach alledem zeigt sich, daß die von der Steuereinheit 32 und der Kraft-Beaufschlagungseinheit 30 erbrachte Funktion nicht nur bei Straßen eines Navigationssystems, sondern auch für beliebig andere Informationen, beispielsweise Hyperlinks einer Internet-Seite, einsetzbar ist. Der Fahrzeugrechner 10 könnte beispielsweise so ausgestattet sein, daß der Benutzer vorgeben kann, welche Art von auf dem Bildschirm 20 dargestellten Informationen eine solche magnetische Wirkung zugeordnet bekommen.

## Patentansprüche

1. Fahrzeugrechner-System mit Navigationssystem und mit
- einer Rechnereinheit (12), die eine Steuereinheit (32) aufweist, wobei die Steuereinheit (32) ein erstes Mittel (34) zur Erfassung der Darstellungsbereiche von vorgebbaren Informationen (54-58, 82) auf dem Bildschirm aufweist, und wobei die Steuereinheit (32) ein zweites Mittel (36) zur Ermittlung eines Einzugbereichs (60) vorgebbarer Größe zu einem Darstellungsbereich aufweist,
- einem Bildschirm (20) zur Darstellung von Informationen (54-58, 82), eines Cursors (62) und Auswahlmenüs mit einzelnen Auswahlmenüpunkten, und
- einem Bedienelement (22, 23, 24), welches sich zur zweidimensionalen Bewegung des Cursors auf dem Bildschirm und zur Auswahl von Auswahlmenüpunkten in einer Ebene verschieben lässt,
- einer Kraft-Beaufschlagungseinheit (30) zur Beaufschlagung des Bedienelements (22) mit einer Betätigungskraft, wenn der Cursor (62) in einem Einzugsbereich (60) liegt, derart, dass der Cursor in den zugehörigen Darstellungsbereich bewegt wird, wobei es sich bei den auf dem Bildschirm (20) dargestellten Informationen um Straßen (54-58) handelt, denen jeweils eine Priorität zugeordnet werden kann, und wobei bei einer Kreuzung von zwei Straßen der Cursor auf die Straße bewegt wird, die eine höhere Priorität besitzt.

2. Fahrzeugrechner-System nach Anspruch 1, **dadurch gekennzeichnet, dass** das Bedienelement (22) als Schiebe-Element ausgebildet ist.

3. Fahrzeugrechner-System nach Anspruch 1, **dadurch gekennzeichnet, dass** bei einer Betätigung des Bedienelements (22) in eine der beiden Richtungen (x-, y-Richtung) zur Bewegung des Cursors die Kraft-Beaufschlagungseinheit (30) das Bedienelement (22) mit einer Betätigungskraft beaufschlagt, um den Cursor in die andere Richtung so zu bewegen, dass er auf dem Darstellungsbereich bleibt.

4. Fahrzeugrechner-System nach Anspruch 3, **dadurch gekennzeichnet, dass** die Höhe der Betätigungskraft einstellbar ist.

5. Fahrzeugrechner-System nach Anspruch 3 oder 4, **dadurch gekennzeichnet, dass** die Höhe der Betätigungskraft von dem Typ der Straße (54-58) abhängt.

6. Fahrzeugrechner-System nach einem der vorhergehenden Ansprüche, **dadurch gekennzeichnet, dass** das Bedienelement (22) auch einen Drehsteller aufweist.

7. Verfahren zur Steuerung eines Cursors für ein Fahrzeugrechner-System (10), das in einem Fahrzeug angeordnet ist, und das einen Bildschirm (20) zur Darstellung von Informationen (54-58, 82), Auswahlmenüs und eines Cursors (62), und ein Bedienelement (22), welches sich zur Bewegung des Cursors und zur Auswahl eines Auswahlmenüs in einer Ebene verschieben lässt, und ein Navigationssystem (14) aufweist, mit den Schritten:
- Erfassen eines Darstellungsbereichs einer vorgebbaren Information (54-58, 82) auf dem Bildschirm (20), wobei es sich bei den auf dem Bildschirm (20) dargestellten Informationen um Straßen (54-58) handelt, denen jeweils eine Priorität zugeordnet werden kann und die Teil eines dargestellten Kartenausschnitts des Navigationssystems (14) sind,
- Erfassen des Abstandes des Cursors (62) zu einem benachbarten Darstellungsbereich,
- automatisches Beaufschlagen des Bedienelements (22) mit einer Kraft, wenn der Abstand zu einem Darstellungsbereich einen vorgebbaren Wert (A, B) unterschreitet, um den Cursor (62) auf diesen Darstellungsbereich zu bewegen, wobei bei einer Kreuzung von zwei Straßen der Cursor auf die Straße bewegt wird, die eine höhere Priorität besitzt.

8. Verfahren nach Anspruch 7, **dadurch gekennzeichnet, dass** bei einer manuellen Betätigung des Bedienelements (22) in eine der beiden Richtungen (x-, y-Richtung) zur Bewegung des Cursors (62) eine Betätigungskraft erzeugt wird, mit der das Bedienelement (22) beaufschlagt wird, um den Cursor (62) in die andere Richtung zu bewegen, so dass er den Darstellungsbereich nicht verlässt.

9. Verfahren nach Anspruch 7, **dadurch gekennzeichnet, dass** die Höhe der Kraft von dem Typ der Straße (54-58) abhängt.

## Claims

1. Vehicle computer system with a navigation system and with
- a computer unit (12), featuring a control unit (32), wherein the control unit (32) features a first means (34) for capturing the display areas of predeterminable information (54-58, 82) on the screen, and wherein the control unit (32) has a second means (36) for determining a catchment area (60) of a predeterminable size for a display area,
- a screen (20) for displaying information (54-58, 82), a cursor (62) and selection menus with individual selection menu items, and
- an operating element (22, 23, 24), which may be used for the two-dimensional movement of the cursor on the screen and for selecting menu items in a plane,
- a force application unit (30) for the application of an actuating force to the operating element (22) when the cursor (62) is in a catchment area (60), so that the cursor is moved into the corresponding display area, the information displayed on the screen (20) being streets (54-58), each of which may be assigned a priority, and where at an intersection of two streets, the cursor is moved to the street that has a higher priority.

2. Vehicle computer system according to claim 1, **characterised in that** the operating element (22) is formed as a sliding element.

3. Vehicle computer system according to claim 1, **characterised in that** when the operating element (22) is actuated in one of the two directions (x, y directions) in order to move the cursor, the force application unit (30) applies an actuating force to the operating element (22) in order to move the cursor in the opposite direction, such that it remains in the display area.

4. Vehicle computer system according to claim 3, **characterised in that** the strength of the actuating force is adjustable.

5. Vehicle computer system according to claim 3 or 4 is **characterised in that** the strength of the actuating force depends on the type of street (54-58).

6. Vehicle computer system according to one of the preceding claims, **characterised in that** the operating element (22) also features a rotary actuator.

7. Method for controlling a cursor for a vehicle computer system (10) arranged inside a vehicle which features a screen (20) for displaying information (54-58, 82), selection menus and a cursor (62), and an operating element (2-2) that can be moved in a plane for moving the cursor and for selecting a selection menu item, and a navigation system (14), comprising the following steps:
- Detecting a display region of a predeterminable information (54-58, 82) on the screen (20), the information displayed on the screen (20) being streets (54-58), each one of which may be assigned a priority; and which are part of a displayed map section of the navigation system (14),
- Detecting the distance of the cursor (62) from an adjacent display area,
- Automatically applying force to the operating element (22) when the distance to a display area falls below a predeterminable value (A, B) in order to move the cursor (62) onto this display area, wherein at an intersection of two streets, the cursor is moved to the street that has a higher priority.

8. Method according to claim 7, **characterised in that** in case of a manual actuation of the operating element (22) in one of the two directions (x, y directions) in order to move the cursor (62), an actuating force is generated and applied to the operating element (22) in order to move the cursor (62) in the opposite direction, such that it does not leave the display area.

9. Method according to claim 7, **characterised in that** the strength of the force depends on the type of street (54-58).

## Revendications

1. Système d'ordinateur véhiculaire doté d'un système de navigation et doté
- d'une unité d'ordinateur (12), qui présente une unité de commande (32), dans lequel l'unité de commande (32) présente un premier moyen (34) de saisie des zones de présentation d'informations (54-58, 82) susceptibles d'être prédéfinies sur l'écran, et dans lequel l'unité de commande (32) présente un second moyen (36) pour déterminer une zone d'alimentation (60) aux dimensions susceptibles d'être prédéfinies vers une zone de présentation,
- d'un écran (20) pour la représentation d'informations (54-58, 82), d'un curseur (62) et d'un menu de sélection doté de différents points de menu de sélection, et
- d'un élément de commande (22, 23, 24), lequel peut être déplacé pour le mouvement en deux dimensions du curseur sur l'écran et pour la sélection de points de menu de sélection dans un niveau,
- d'une unité d'injection d'énergie (30) pour l'injection de l'élément de commande (22) avec une force opérante, lorsque le curseur (62) se trouve dans une zone d'alimentation (60), de telle sorte que le curseur est déplacé dans les zones de représentation correspondantes, dans lequel les informations représentées sur l'écran (20) sont des rues (54-58), auxquelles il est respectivement possible d'attribuer une priorité, et dans lequel, en cas de croisement de deux rues, le curseur se déplace sur la rue qui possède une priorité supérieure.

2. Système d'ordinateur véhiculaire selon la revendication 1, **caractérisé en ce que** l'élément de commande (22) est agencé sous forme d'élément coulissant.

3. Système d'ordinateur véhiculaire selon la revendication 1, **caractérisé en ce que**, lors d'une activation de l'élément de commande (22) dans l'une des deux directions (direction x, direction y) pour le déplacement du curseur, l'unité d'injection d'énergie (30) injecte une énergie opérante à l'élément de commande (22) afin de déplacer le curseur dans l'autre direction de sorte à ce qu'il demeure sur la zone de représentation.

4. Système d'ordinateur véhiculaire selon la revendication 3, **caractérisé en ce que** le niveau de l'énergie opérante est réglable.

5. Système d'ordinateur véhiculaire selon la revendication 3 ou 4, **caractérisé en ce que** le niveau de l'énergie opérante dépend du type de rue (54-58).

6. Système d'ordinateur véhiculaire selon l'une quelconque des revendications précédentes, **caractérisé en ce que** l'élément de commande (22) présente également un actionneur rotatif.

7. Procédé de commande d'un curseur pour un système d'ordinateur véhiculaire (10) disposé dans un véhicule et qui présente un écran (20) pour la représentation d'informations (54-58, 82), un menu de sélection et un curseur (62), et un élément de commande (22), qui peut être déplacé pour faire bouger le curseur et pour la sélection d'un menu de sélection dans un niveau, ainsi qu'un système de navigation (14), avec les étapes :
- de saisie d'une zone de représentation d'une information (54-58, 82) susceptible d'être prédéfinie sur l'écran (20), dans lequel les informations représentées sur l'écran (20) sont des rues (54-58), auxquelles il est respectivement possible d'attribuer une priorité, et qui constituent une partie d'une section de carte représentée sur le système de navigation (14),
- de saisie de l'écart du curseur (62) sur une zone de représentation voisine,
- d'injection automatique de l'élément de commande (22) avec une énergie lorsque l'écart sur une zone de représentation est inférieur à une valeur (A, B) susceptible d'être prédéfinie, afin de déplacer le curseur (62) sur cette zone de représentation, et dans lequel, en cas de croisement de deux rues, le curseur se déplace sur la rue qui possède une priorité supérieure.

8. Procédé selon la revendication 7, **caractérisé en ce qu'**en cas d'activation manuelle de l'élément de commande (22) dans l'une des deux directions (direction x, direction y) pour le déplacement du curseur (62), une énergie opérante est générée, grâce à laquelle l'élément de commande (22) est injecté afin de déplacer le curseur (62) dans l'autre direction, de sorte qu'il ne quitte pas la zone de représentation.

9. Procédé selon la revendication 7, **caractérisé en ce que** le niveau de l'énergie dépend du type de la rue (54-58).
